# EUROPÄISCHE PATENTSCHRIFT

(11) **EP 0 599 208 B1**
(45) Veröffentlichungstag und Bekanntmachung des Hinweises auf die Patenterteilung: **19.02.1997**
(21) Anmeldenummer: 93118619.1
(22) Anmeldetag: 19.11.1993
(51) Int. Cl.: B32B 27/18, B32B 27/08

(54) **UV-geschützte Kunststoffplatte oder -folie mit UV-absorbierender Deckschicht**
UV-protected plastic sheet or foil with UV-absorbing outer layer
Feuille au plaque protegée contre le rayonnement UV, avec une couche de revêtement absorbant l'UV

(30) Priorität: 25.11.1992 DE 9216001 U
(43) Veröffentlichungstag der Anmeldung: 01.06.1994
(73) Patentinhaber: Röhm GmbH, 64293 Darmstadt (DE)
(72) Erfinder: Delp, Stefan, D-64625 Bensheim (DE); Greb, Horst, Dr., D-64372 Ober-Ramstadt (DE); Meier-Kaiser, Michael, Dr., D-64319 Pfungstadt (DE)

(56) Entgegenhaltungen:
- EP-A- 0 110 221
- EP-A- 0 305 660
- EP-A- 0 360 353
- DE-U- 8 113 747
- US-A- 4 922 113
- DATABASE WPI Week 8725, Derwent Publications Ltd., London, GB; AN 87-173663 & JP-A-62 104 525 (MITSUBISHI KASEI) 15. Mai 1987
- DATABASE WPI Week 8725, Derwent Publications Ltd., London, GB; AN 87-173663 & JP-A-62 104 525

## Beschreibung

Die Erfindung betrifft eine UV-geschützte Kunststoffplatte oder -folie, enthaltend eine Kernschicht aus einem gegenüber UV-Strahlung empfindlichen Kunststoff und wenigstens auf einer Seite der Kernschicht eine Deckschicht von geringerer Dicke als die Kernschicht aus einem Kunststoff mit einem Gehalt an UV-absorbierenden Bestandteilen, welcher zur weitgehenden oder vollständigen Absorption der einfallenden UV-Strahlung ausreicht, wobei eine der Schichten einen durch UV-Strahlung aktivierbaren Fluoreszenzfarbstoff enthält.

### Stand der Technik

Eine gattungsmäßige Kunststoffplatte ist aus dem Deutschen Gebrauchsmuster G 81 13 747 bekannt. Bei einer typischen Ausführungsform enthält die Kunststoffplatte eine dickere Kernschicht ohne Floureszenzfarbstoff und wenigstens eine dünnere Deckschicht mit einem Gehalt an einem Fluoreszenzfarbstoff. Durch UV-Bestrahlung wird die Deckschicht zur Fluoreszenz angeregt. Das Vorhandensein der Deckschicht und ihre Gleichmäßigkeit sind an dem Auftreten und der Helligkeitsverteilung des Fluoreszenzlichtes zu erkennen, was zur Überwachung des Herstellungsverfahrens ausgenutzt wird.

Bei einer besonderen Ausführungsform der bekannten Kunststoffplatte ist eine dickere Kernschicht mit einem Gehalt eines UV-Absorbers zwischen zwei Fluoreszenzfarbstoff enthaltenden Deckschichten eingeschlossen. Durch UV-Bestrahlung von beiden Seiten können beide Deckschichten getrennt beobachtet werden, da die UV-Strahlung die Kernschicht nicht zu durchdringen vermag.

Häufig wird eine dickere Kernschicht aus einem gegen UV-Strahlung empfindlichen Kunststoff mit schützenden dünneren Deckschichten aus einem UV-absorbierenden Kunststoff versehen. Gerade in diesem Fall ist die Überwachung der Schichtdicke durch einen in der Deckschicht enthaltenen Fluoreszenzfarbstoff schwierig, weil die anregende UV-Strahlung absorbiert wird und wirkungslos bleibt.

US-PS 4 922 113 beschreibt ein Verfahren zur Überprüfung von Beschichtungen bei koextrudierten Kunststoffbahnen. Dabei enthält die Deckschicht einen als "uvescer'' bezeichneten Farbstoff, der Strahlung im ultravioletten Bereich absorbiert und auch emitiert. Zur Detektion möglicher Fehlstellen im Deckschichtprofil der extrudierten Bahn wird die emittierte UV-Strahlung der Deckschicht verwendet. Das Verfahren eignet sich besonders für Subtrate (Kernschichten), die einen Fluoreszenzfarbstoff (''luminescer'') enthalten, der ultraviolette Strahlung absorbiert und hauptsächlich im sichtbaren Bereich emitiert. Der Nachteil des Verfahrens liegt in der benötigten, aufwendigen Meßapparatur.

### Aufgabe und Lösung

Der Erfindung liegt die Aufgabe zugrunde, auch in diesem Falle eine Überwachung der Dicke und Wirksamkeit der Deckschichten während der Herstellung - z.B. durch Koextrusion von Kern- und Deckschichten - zu ermöglichen.

Zur Lösung der gestellten Aufgabe bedient sich die Erfindung wiederum des Fluoreszenzlichtes, das von einem in der Kunststoffplatte enthaltenen Fluoreszenzfarbstoff unter UV-Bestrahlung ausgesendet wird. Während jedoch bei der bekannten Kunststoffplatte der Fluoreszenzfarbstoff in der dünnen Deckschicht enthalten ist, um diese selbst aufleuchten zu lassen, ist erfindungsgemäß der Fluoreszenzfarbstoff in der Kernschicht enthalten.

Fluoreszenz tritt also nur auf, wenn die einfallende UV-Strahlung in der Deckschicht nicht absorbiert wird.

Gegenstand der Erfindung ist demnach eine UV-geschützte Kunststoffplatte oder -folie, enthaltend eine Kernschicht aus einem gegenüber UV-Strahlung empfindlichen Kunststoff und wenigstens auf einer Seite der Kernschicht eine Deckschicht von geringerer Dicke als die Kernschicht aus einem Kunststoff mit einem Gehalt an UV-absorbierenden Bestandteilen, welcher zur weitgehenden oder vollständigen Absorption der einfallenden UV-Strahlung ausreicht. Erfindungsgemäß enthält die Kernschicht einen durch UV-Strahlung aktivierbaren Fluoreszenzfarbstoff.

Würde diese allein mit einer anregenden UV-Strahlung bestrahlt, so würde sie Fluoreszenzlicht aussenden. Wenn jedoch die Deckschicht ihre Aufgabe, die Kernschicht vor UV-Strahlung zu schützen, ausreichend erfüllt, so wird in der Kernschicht kein Fluoreszenzlicht mehr erzeugt. Wenn die Deckschicht z.B. infolge eines Herstellungsfehlers stellenweise fehlt oder so dünn oder so wenig wirksam ist, daß ein beträchtlicher Teil der auftreffenden UV-Strahlung bis in die Kernschicht vordringt, so wird dort Fluoreszenzstrahlung ausgelöst. Das Auftreten von Fluoreszenzlicht ist demnach ein Anzeichen von Mängeln in der Deckschicht. Auf diese Weise kann das Herstellungsverfahrens laufend überwacht werden.

Ein besonderer Vorteil der Erfindung liegt darin, daß die durch die Deckschicht angestrebte Schutzwirkung auf dem gleichen Effekt beruht wie die Verhinderung der Fluoreszenzstrahlung, nämlich auf der Absorption der UV-Strahlung in der Deckschicht. Unabhängig davon, ob dieser Schutz durch das Fehlen oder eine zu geringe Dicke der Deckschicht oder durch das Fehlen oder die Zersetzung des UV-Absorbers oder aus einer Kombination derartiger Mängel beeinträchtigt wird, zeigt das Auftreten von Fluoreszenzlicht stets einen Mangel der Deckschicht an, der abzustellen ist. Um Schwankungen der Schichtdicke erkennen zu können, würde zwar schon eine geringe Verminderung der in die Kernschicht eindringenden UV-Strahlung genügen, jedoch wird erst bei weitgehender oder völliger Absorption der schädigenden Strahlung der angestrebte Schutz der Kernschicht erreicht. Ein UV-Absorber, der die schädigende UV-Strahlung weitgehend, aber die anregende UV-Strahlung nur teilweise absorbiert, würde den Zwecken der Erfindung bereits genügen.

### Ausführung der Erfindung

Unter UV-empfindlichen Kunststoffen werden solche verstanden, die unter längerer Einwirkung von UV-Strahlung, insbesondere des UV-Anteils des Tages- bzw. Sonnenlichtes altern, z.B. durch Vergilben, Ausbleichen, Verspröden, Mattwerden der Oberfläche oder ähnliche Erscheinungen an den der Strahlung ausgesetzten Flächen. Die meisten Kunststoffe zeigen eine gewisse UV-Empfindlichkeit, zumindest wenn sie in südlichen geographischen Breiten der Sonnenstrahlung ausgesetzt sind. Selbst Polymethylmethacrylat, das als der Kunststoff mit der höchsten Alterungs- und Witterungsbeständigkeit gilt, wird für die Anwendung im Freien häufig mit UV-Absorbern ausgerüstet.

Eine höhere UV-Empfindlichkeit haben Kunststoffe auf Basis von Olefinen, Dienen und Vinylaromaten. Ausgeprägt UV-empfindlich sind Polyvinylchlorid und Kunststoffe mit aromatischen Resten in der Hauptkette, wie Polycarbonatkunststoffe, deren bekanntester Vertreter das Bisphenol-A-polycarbonat ist. Kunststoffplatten aus Polycarbonat kommen überwiegend mit ein- oder beidseitigen Schutzschichten aus UV-absorbierendem Polycarbonat in den Handel.

Es versteht sich, daß für die Kern- und Deckschichten Kunststoffe verwendet werden, die den Erfordernissen des Herstellungsverfahrens in üblicher Weise angepaßt sind. So müssen für die Extrusion bzw. Koextrusion Kunststoff-Formmassen mit geeigneter Schmelz- bzw. Lösungsviskosität verwendet werden. Transparente, insbesondere farblose und klare Kunststoffe sind bevorzugt.

Die Begriffe "Platte oder Folie" sind umfassend zu verstehen. Dazu gehören Folien unter 1 mm bis herab zu 10 Mikrometer, Vollplatten von 1 bis 100 mm, insbesondere 1 bis 10 mm, sowie Hohlkammerplatten, die aus parallelen Deckschichten und einstückig dazwischen angeordneten Stegen aufgebaut sind und in der Regel eine Gesamtdicke von 4 bis 50 mm haben. Alle genannten Platten oder Folien werden überwiegend durch kontinuierliche Extrusion, gegebenenfalls mit anschließender Glättung in einem Walzenglättwerk hergestellt. Vorzugsweise sind alle am Aufbau der Platten oder Folien beteiligten Schichten glatt und eben und von gleichförmiger Dicke.

Die UV-absorbierenden Deckschichten werden in der Regel im Zuge des Fertigungsverfahren aufgebracht. Ein gebräuchliches Verfahren ist das Beschichten der Bahnoberfläche mit einem lösungsmittelhaltigen Lack, der einen UV-Absorber und einen Kunststoff als Bindemittel enthält und anschließend getrocknet wird. Vorzugsweise werden die Deckschichten in an sich bekannter Weise zusammen mit der Kernschicht durch Koextrusion erzeugt. Dazu kann das Verfahren der Adapter-Koextrusion angewendet werden, bei dem aus dem Kernschicht- und dem Deckschichtmaterial je ein thermoplastischer Schmelzstrang erzeugt wird. Im Koextrusionsadapter werden die Stränge zusammengeführt und haftend verbunden und im Verteilerkanal einer angeschlossenen Schlitzdüse auf die gewünschte Breite und Dicke geformt. Alternativ kann das Verfahren der Mehrschichtextrusion angewendet werden, bei dem die beiden Schmelzestränge in getrennten Verteilerkanälen auf die gewünschte Breite und Dicke geformt und erst kurz vor dem Düsenmund zu einer Mehrfachschicht zusammengeführt werden.

Bei der Koextrusion war es bisher schwierig, die Dicke und Gleichmäßigkeit von transparenten und UV-absorbierenden Deckschichten während der Produktion zu überwachen. Wenn die Kernschicht selbst kleine Mengen an UV-Absorber enthält, was üblich ist, so läßt sich die Dicke der Deckschicht auch nicht anhand der Gesamtabsorption der Platte im UV-Bereich verfolgen. Die Erfindung ist daher besonders vorteilhaft für die Herstellung von Platten und Folien durch Koextrusion der Kern- und Deckschichten.

Deckschichten können auf einer oder auf beiden Seiten der Platten und Folien angeordnet sein. Sie erstrecken sich in der Regel über die gesamte Oberfläche der beschichteten Kernschichtseite. Sie sind deutlich dünner als die Kernschicht und können z.B. eine Dicke von 2 bis 100 Mikrometer haben. In der Regel macht die Deckschicht nicht mehr als 5 % der Kernschichtdicke aus, vorzugsweise 0,5 bis 4 %.

Vorzugsweise sind die Deckschichten unmittelbar mit der Kernschicht haftend verbunden und bilden zugleich wenigstens eine Oberfläche der Platte oder Folie. Dies ist jedoch für die Wirkungsweise der Erfindung nicht erforderlich, so daß gewünschtenfalls vielfältige Abwandlungen möglich sind. Die Kern- und Deckschichten können ihrerseits aus verschiedenen Schichten zusammengesetzt sein oder andersartige Schichten dazwischen einschließen. Auch kann die UV-absorbierende Deckschicht durch weitere Schichten, z.B. aus kratzfestem oder wasserspreitendem Material, überdeckt sein. Alle derartigen Ausführungsformen gehören zu der Erfindung, sofern eine UV-absorbierende Schicht vorhanden ist, die die auf die Platten- oder Folienfläche einfallende UV-Strahlung in solchem Maße absorbiert, daß der Fluoreszenzfarbstoff in der Kernschicht nicht oder nur in erkennbar geschwächtem Maße zur Fluoreszenzlichtbildung angeregt wird.

Vorzugsweise enthält der Kunststoff der Kernschicht geringe Mengen an UV-absorbierenden Bestandteilen, jedoch deutlich weniger als die Deckschichten. Typisch ist ein Gehalt von 0,05 bis 1 Gew.-% an UV-Absorbern. Er kann z.B. aus wiederverwendetem Platten- oder Folienmaterial stammen, wenn dabei die UV-absorbierenden Deckschichten mitverarbeitet werden. Der Gehalt an UV-absorbierenden Bestandteilen in der Kernschicht darf jedoch nicht so hoch sein, daß er die anregende Strahlung unterdrückt und die Fluoreszenz verhindert.

Der Kunststoff der Deckschicht ist vorzugsweise mit dem der Kernschicht gleich. In der Deckschicht wird die UV-Empfindlichkeit des Kunststoffes durch den Gehalt an UV-absorbierenden Bestandteilen ausreichend unterdrückt. Probleme, die auf Unterschieden zwischen dem Kern- und dem Deckschicht-Kunststoff beruhen, wie unzureichende Haftung oder schichtenweise unterschiedliches physikalisches, chemisches oder Korrosionsverhalten werden in diesem Falle von vornherein ausgeschlossen.

Die Erfindung läßt es indessen auch zu, für die Deckschicht einen anderen Kunststoff als für die Kernschicht zu verwenden. Wichtig ist vor allem seine UV-absorbierende Eigenschaft. Sie muß umso stärker sein, je dünner die Deckschicht ist. Die UV-Absorption kann eine Eigenschaft des Kunststoffes selbst sein oder durch Einmischung von UV-Absorbern erreicht werden. UV-absorbierende Kunststoffe können durch Verwendung von Monomeren bzw. Comonomeren mit UV-absorbierenden Gruppen erhalten werden, z.B. von 3-(2-Benzotriazolyl)-2-hydroxy-5-tert-octylbenzylmethacrylamid. Unter den nicht polymergebundenen UV-Absorbern werden solche von geringer Flüchtigkeit bevorzugt. Geeignete UV-Absorber sind z.B. Benzophenone, wie 2-Hydroxy-4n-octoxy-benzophenon, Benztriazole, wie 2-(2-Hydroxy-5-methyl-phenyl)-benztriazol.

Das Deckschichtmaterial soll bei einer Schichtdicke von höchstens 1 mm den überwiegenden Teil der UV-Strahlung im Bereich von 280 bis 380 nm absorbieren, vorzugsweise mehr als 80 %, insbesondere 90 bis 100 %. Dazu werden im allgemeinen 2 bis 20 Gew.-%, vorzugsweise 5 bis 15 Gew.-% der erwähnten UV-absorbierenden Bestandteile, bezogen auf das Gewicht des Deckschichtmaterials benötigt.

Erfindungsgemäß enthält die Kernschicht einen Fluoreszenzfarbstoff, der bei der Einwirkung einer UV-Strahlung Fluoreszenzlicht im sichtbaren Bereich, im Bereich von 400 bis 500 nm, aussendet. Der Fluoreszenzfarbstoff wird so gewählt, daß das entstehende Fluoreszenzlicht nicht durch etwaige Farbstoffe in der Kern- oder Deckschicht absorbiert wird. Das Fluoreszenzlicht kann in der Draufsicht auf die UV-bestrahlte Platte oder Folie beobachtet und erforderlichenfalls in einzelnen Flächenabschnitten quantitativ gemessen werden. Unter der Voraussetzung, daß der Fluoreszenzfarbstoff in der Kernschicht gleichmäßig verteilt ist, gibt der Meßwert des Fluoreszenzlichtes Auskunft über die je Flächeneinheit vorhandene Menge des UV-Absorbers. Bei der kontinuierlichen Herstellung von Platten- oder Folienbahnen kann ein quer zur Produktionsrichtung traversierendes Meßgerät verwendet werden, um die Verteilung des UV-Absorbers über die Bahnbreite zu erfassen. Auch die Messung mit einer Zeilenkamera über die ganze Bahnbreite ist möglich.

Geeignete Fluoreszenzfarbstoffe, die im sichtbaren Bereich vorzugsweise farblos sind und sich in thermoplastischen Kunststoffen homogen verteilen lassen, sind bekannt. Bevorzugt sind Fluoreszenzfarbstoffe, die durch UV-Strahlung im Bereich von 230 bis 380 nm anregbar sind und blaues Fluoreszenzlicht aussenden. Beispiele derartiger Fluoreszenzfarbstoffe sind Derivate von 4,4'-Bis-triazinylamino-stilben-2,2'-disulfonsäure, Cumarin, Bis-benzoxazolyl-Verbindungen, Bis-benzimidazolyl-Verbindungen, Benztriazolen, Pyrazolinen, Naphthalsäureimiden und Bis-styryl-benzol. Wenn der Fluoreszenzfarbstoff nur zur Überwachung der Herstellung dient, braucht er nur kurze Zeit beständig zu sein. Der Fluoreszenzfarbstoff wird zweckmäßigerweise in einer Konzentration von 1 bis 10.000 ppm, vorzugsweise 10 bis 1000 ppm (0,001 bis 0,1 Gew.-%), bezogen auf das Gewicht des Kunststoffes, eingesetzt.

Wenn die Kernschicht selbst UV-absorbierende Bestandteile enthält, so ist die Eindringtiefe der UV-Strahlung begrenzt. Die Konzentration des Fluoreszenzfarbstoffes muß deshalb so hoch bemessen werden, daß in der Eindringzone der UV-Strahlung genügend Fluoreszenz ausgelöst wird.

### BEISPIEL

Durch Adapter-Koextrusion bei einer Schmelztemperatur von 290°C wird eine 4 mm dicke Plattenbahn aus Bis-phenol-A-polycarbonat erzeugt. Zur Bildung der Kernschicht wird eine Formmasse mit einem Gehalt von 0,3 Gew.-% 2-(Hydroxy-3-sec.-butyl-5-tert.-butyl-phenyl)-benztriazol als UV-Absorber und 0,001 Gew.-% 2,2'-(2,5-Thiophenediyl)-bis-(1,1-dimethylethyl)-benzoxazol (Uvitex® OB, Ciba-Geigy) als Fluoreszenzfarbstoff verwendet. Für die Deckschicht wird die gleiche Formmasse ohne Fluoreszenzfarbstoff, jedoch mit einem Gehalt von 10 Gew.-% des oben genannten UV-Absorbers verwendet.

Bei einer Dicke der Deckschicht von 70 Mikrometer tritt bei Bestrahlung mit einer UV-Lampe keine Fluoreszenz auf. Deckschichtzonen von geringerer Dicke fallen durch Fluoreszenzlicht auf. Durch verbesserte Einstellung des Adapters kann die Entstehung fluoreszierender Zonen mit unzureichender UV-Absorption vermieden werden.

## Patentansprüche

1. UV-geschützte Kunststoffplatte oder - folie, enthaltend eine Kernschicht aus einem gegenüber UV-Strahlung empfindlichen Kunststoff und wenigstens auf einer Seite der Kernschicht eine Deckschicht von höchstens 1 mm Dicke und von geringerer Dicke als die der Kernschicht aus einem Kunststoff mit einem Gehalt an UV-absorbierenden Bestandteilen, die den überwiegenden Teil der UV-Strahlung im Bereich von 280 - 380 nm zu absorbieren vermag, wobei eine der Schichten einen Fluoreszenzfarbstoff in einer Konzentration von 1 - 10 000 ppm bezogen auf das Gewicht des Kunststoffs enthält und der Fluoreszenzfarbstoff bei Einwirkung von UV-Strahlung Fluoreszenzlicht im sichtbaren Bereich von 400 bis 500 nm aussendet,
dadurch gekennzeichnet,
daß die Kernschicht den Fluoreszenzfarbstoff enthält.

2. Verfahren zur Herstellung einer UV-geschützten Kunststoffplatte gemäß Anspruch 1 mit gleichmäßiger Deckschichtdicke
dadurch gekennzeichnet, daß
die Kunststoffplatte während der Extrusion von der Seite der Deckschicht her durch Bestrahlung mit UV-Licht auf das Auftreten einer von der Kernschicht emitierten Fluoreszenzstrahlung im sichtbaren Bereich durch Beobachtung oder Messung überwacht wird und gegebenenfalls bei Auftreten einer solchen Fluoreszenzstrahlung, dieser durch eine Erhöhung der Deckschichtdicke an der Stelle der aufgetretenen Fluoreszenzstrahlung entgegengewirkt wird.

## Claims

1. An ultraviolet-protected plastic plate or sheet, comprising a core layer made of a plastic material which is sensitive to ultraviolet radiation, and a cover layer which covers at least one side of the core layer, and which has a maximum thickness of 1 mm and which has a thickness which is less than the thickness of the core layer, wherein said cover layer is made of a plastic material comprising ultraviolet-absorbing components and is able to absorb most of the ultraviolet radiation within the range of 280 to 380 nm, and wherein one of the layers comprises a fluorescent dyestuff in a concentration of 1 - 10,000 ppm based on the plastic material, wherein the fluorescent dyestuff emits fluorescent light within the visible range of 400 to 500 nm upon irradiation with ultraviolet radiation, characterised in that the core layer contains the fluorescent dyestuff.

2. A process for preparing an ultraviolet-protected plastic plate according to claim 1 having a uniform thickness of the cover layer, characterised in that, during extrusion, the plastic plate is irradiated with ultraviolet light from the side of the cover layer, and monitored by observation or measurement for signs of fluorescence within the visible range emitted by the core layer, and if there are signs of such fluorescence they are counteracted by increasing the cover layer thickness at the site where such fluorescence occurred.

## Revendications

1. Plaque ou feuille en matière plastique protégée contre les UV, contenant une couche d'âme en une matière plastique sensible aux rayons UV et, d'un côté au moins de la couche d'âme, une couche de revêtement de 1 mm d'épaisseur au maximum et ayant une moindre épaisseur que la couche d'âme, en une matière plastique qui contient des constituants absorbant les UV capables d'absorber la majeure partie des rayons UV dans le domaine de 280 à 380 nm, l'une des couches contenant un colorant fluorescent en une concentration de 1 à 10 000 ppm par rapport au poids de la matière plastique et le colorant fluorescent émettant, sous l'action des rayons UV, de la lumière fluorescente dans le domaine visible de 400 à 500 nm,
caractérisée en ce que c'est la couche d'âme qui contient le colorant fluorescent.

2. Procédé de fabrication d'une plaque en matière plastique protégée contre les UV selon la revendication 1 avec une épaisseur uniforme de la couche de revêtement,
caractérisé en ce qu'au cours de l'extrusion, par irradiation avec de la lumière UV par le côté de la couche de revêtement, la plaque de matière plastique est surveillée, par observation ou mesure, en ce qui concerne l'apparition d'un rayonnement fluorescent émis par la couche d'âme dans le domaine visible et éventuellement, en cas d'apparition d'un tel rayonnement fluorescent, celui-ci est contrecarré par une augmentation de l'épaisseur de la couche de revêtement à l'endroit où est apparu le rayonnement fluorescent.
